# EUROPÄISCHE PATENTSCHRIFT

(11) **EP 0 644 906 B1**
(45) Veröffentlichungstag und Bekanntmachung des Hinweises auf die Patenterteilung: **07.05.1997**
(21) Anmeldenummer: 93912798.1
(22) Anmeldetag: 26.05.1993
(51) Int. Cl.: C08G 18/22, C08G 18/48

(54) **VERFAHREN ZUR HERSTELLUNG VON VERBUNDKÖRPERN**
PROCESS FOR MAKING COMPOSITES
PROCEDE DE FABRICATION DE COMPOSITES

(30) Priorität: 09.06.1992 DE 4218840
(43) Veröffentlichungstag der Anmeldung: 29.03.1995
(73) Patentinhaber: BAYER AG, 51368 Leverkusen (DE)
(72) Erfinder: LIMAN, Ulrich, D-4019 Monheim 2 (DE); WEGENER, Dirk, D-4019 Monheim (DE); GRAMMES, Hartwig, D-5090 Leverkusen 1 (DE)
(86) Internationale Anmeldenummer: EP9301325
(87) Internationale Veröffentlichungsnummer: WO9325597

(56) Entgegenhaltungen:
- EP-A- 0 294 161
- GB-A- 2 064 567

## Beschreibung

Die Erfindung betrifft ein neues Verfahren zur Herstellung von Verbundkörpern durch Hinterschäumen von Kunststoffolien mit einem zu einem weichen oder halbharten Polyurethanschaumstoff ausreagierenden Reaktionsgemisch, welches als Katalysatoren bestimmte, in der Alkalisalz-Form vorliegende Hydroxycarbonsäuren enthält.

Folienverbundkörper, die durch Hinterschäumen einer Kunststoffolie mit einem zu einem weichen oder halbharten Polyurethanschaumstoff ausreagierenden Reaktionsgemisch hergestellt werden, sind von großer technischer Bedeutung und werden beispielsweise in größtem Umfang zur Innenausstattung von Kraftfahrzeugen, Flugzeugen oder zur Herstellung von Polstermöbeln verwendet. Für die meisten dieser Einsatzgebiete ist es wesentlich, daß die Schaumstoffe neben guten mechanischen Eigenschaften (insbesondere ausgezeichnete Reißfestigkeit) einen guten Warmestand und eine geringe Tendenz zum "Fogging" aufweisen. Insbesondere das "Fogging"-Verhalten (Tendenz zur Abspaltung von schwer flüchtigen, sich an kühlen Flächen wie beispielsweise Autoscheiben niederschlagenden Verbindungen) der bekannten Hinterfüllschäume stellt ein verbesserungswürdiges Problem dar.

Zu "Fogging" führende Bestandteile des zum Polyurethanschaumstoff ausreagierenden Reaktionsgemisches sind beispielsweise die oftmals als Katalysator eingesetzten tertiären Amine, so daß bereits versucht wurde, diese Amine beispielsweise durch Alkalimetallsalze von Carbonsäuren wie beispielsweise Kaliumacetat zu ersetzen. Die alleinige Katalyse mit derartigen Katalysatoren ist jedoch mit dem Nachteil einer zu langen Entformzeit oder (bei erhöhter Katalysatorkonzentration) zu kurzer Startzeiten verknüpft. Die Verwendung von organischen Zinnverbindungen führt zwar im allgemeinen zu einer Verbesserung des "Fogging"-Verhaltens, jedoch wegen der Hydrolyselabilität der organischen Zinnverbindungen im wasserhaltigen Polyol zu Problemen bezüglich der konstanten Aktivierung der Polyol-Komponente über einen längeren Lagerzeitraum.

Die in US-PS 4 868 043 und GB-A- 2 064 567 empfohlene Verwendung von in der Alkalisalz-Form vorliegenden Halbestern aus (i) intramolekularen Carbonsäureanhydriden und (ii) langkettigen Diolen als Katalysatoren führt wegen der Monofunktionalität dieser Verbindungen im Sinne der Isocyanat-Additionsreaktion zwangsläufig zu Kettenabbruchs-Reaktionen, und damit zu einer verminderten Reißfestigkeit des Schaumstoffs.

Die DE-PS 40 29 081 empfiehlt die Verwendung von Salzen von Hydroxycarbonsäuren, die zwar bei Raumtemperatur in den üblichen Polyolkomponenten löslich sind, jedoch bei Temperaturen von oberhalb 40°C entmischen und nach Abkühlung auf Raumtemperatur einen unlöslichen Bodensatz bilden.

Wie jetzt überraschend gefunden wurde, können die angesprochenen Probleme unter Verwendung der nachstehend näher beschriebenen erfindungswesentlichen Katalysatoren in optimaler Weise gelöst werden. Der wesentliche Punkt des nachstehend näher beschriebenen erfindungsgemäßen Verfahrens besteht darin, als Katalysatoren in der Alkalisalz-Form vorliegende Umsetzungsprodukte aus mindestens dreiwertigen Alkoholen und intramolekularen Carbonsäureanhydriden zu verwenden, wobei die Umsetzungsprodukte im statistischen Mittel pro Molekül mindestens 2 Hydroxylgruppen und mindestens 0,5 Alkalicarboxylatgruppen aufweisen müssen. Wegen der Verwendung von mindestens difunktionellen Verbindungen finden Kettenabbruchsreaktionen praktisch nicht statt. Ein weiterer Vorteil der erfindungswesentlichen, einbaufähigen Katalysatoren ist neben dem erreichbaren ausgezeichneten "Fogging"-Verhalten in dem Umstand zu sehen, daß die erfindungsgemäßen Reaktionsgemische vergleichsweise lange Startzeiten bei unverändert kurzen Entformungszeiten ermöglichen.

Gegenstand der Erfindung ist ein Verfahren zur Herstellung von Verbundkörpern durch Hinterschäumen einer Kunststoffolie als Deckschicht mit einem zu einem weichen oder halbharten Polyurethanschaumstoff ausreagierenden Reaktionsgemisch, bestehend im wesentlichen aus
a) einer Polyisocyanatkomponente,
b) einer Salzgruppen-freien Polyolkomponente,
c) mindestens einem Treibmittel,
d) Alkalisalzen von Hydroxycarbonsäuren als Katalysatoren, sowie gegebenenfalls
e) weiteren Hilfs- und Zusatzmitteln der Polyurethanchemie und gegebenenfalls weiteren, an nich bekannten Katalysatoren, die nicht der Definition der Komponente d) entsprechen, in einer Menge von max. 1.0 gew% bezogen auf das gewicht der Komponente b)
dadurch gekennzeichnet, daß man als Komponente d) in einer Menge von 0,5 bis 10 Gew.-%, bezogen auf das Gewicht der Komponente b), in der Alkalisalz-Form vorliegende Umsetzungsprodukte, die im statistischen Mittel pro Molekül mindestens 2 alkoholische Hydroxylgruppen und mindestens 0,5 Alkalicarboxylatgruppen aufweisen, aus (i) mindestens dreiwertigen Alkoholen des Molekulargewichtsbereichs 92 bis 10 000 und (ii) intramolekularen Carbonsäureanhydriden verwendet.

Bei der beim erfindungsgemäßen Verfahren einzusetzenden Polyisocyanatkomponente a) handelt es sich um beliebige Di- oder Polyisocyanate, insbesondere um solche mit aromatisch gebundenen Isocyanatgruppen. Vorzugsweise werden 2,4-Diisocyanatotoluol, dessen technische Gemische mit 2,6-Diisocyanatotoluol (TDI), sowie insbesondere bei Raumtemperatur flüssige Polyisocyanatgemische der Diphenylmethanreihe (MDI) eingesetzt. In diesem Zusammenhang insbesondere von Interesse sind Polyisocyanatgemische, wie sie durch Phosgenierung von Anilin-Formaldehyd-Kondensaten erhalten werden bzw. aus derartigen Phosgenierungsprodukten hergestellte Destillationsfraktiönen bzw. Destillationsrückstände oder Urethan-, Carbodiimid- und/oder Uretdiongruppen aufweisende Modifizierungsprodukte derartiger Polyisocyanate oder Polyisocyanatgemische der Diphenylmethanreihe. Die bevorzugten, gegebenenfalls chemisch modifizierten Polyisocyanatgemische der Diphenylmethanreihe weisen im allgemeinen einen NCO-Gehalt von ca. 25 bis 33 Gew.-% auf.

Bei der Komponente b) handelt es sich insbesondere um Polyetherpolyole oder Gemische von Polyetherpolyolen mit einem (mittleren), aus Hydroxylgruppengehalt und Hydroxylfunktionalität errechenbaren Molekulargewicht von 400 bis 12 000, vorzugsweise 2 000 bis 6 000, und einer (mittleren) Hydroxylfunktionalität von 2 bis 8, vorzugsweise 2 bis 4, oder um Gemische aus derartigen Polyetherpolyolen mit mehrwertigen Alkoholen eines unter 400 liegenden Molekulargewichtes, die gegebenenfalls in einer Menge von bis zu 10 Gew.-%, bezogen auf das Gewicht der Polyetherpolyole an 2- und/oder 3-wertigen Alkoholen mitverwendet werden können.

Die in Betracht kommenden Polyetherpolyole sind solche der an sich bekannten Art, wie sie durch Alkoxylierung geeigneter Startermoleküle, in an sich bekannter Weise zugänglich sind. Geeignete Startermoleküle sind beispielsweise Ethylenglykol, Propylenglykol, Trimethylolpropan, Glycerin, Sorbit, Pentaerythrit oder Saccharose bzw. beliebige Gemische derartiger mehrwertiger Alkohole. Ganz besonders bevorzugt werden Polyetherpolyole eingesetzt, die durch Alkoxylierung von trifunktionellen Startermolekülen, insbesondere von Trimethylolpropan und/oder Glycerin erhalten worden sind. Bei den Alkylenoxiden, die bei der Alkoxylierungsreaktion zum Einsatz gelangen, handelt es sich insbesondere um Propylenoxid oder Ethylenoxid bzw. um Gemische dieser beiden Alkylenoxide. Die genannten Alkylenoxide können bei der Alkoxylierungsreaktion auch nacheinander zum Einsatz gelangen. Weitere im Prinzip geeignete Polyole, die als Komponente b) zum Einsatz gelangen können, sind beispielsweise in der EP-A 0 380 993 beschrieben.

Bei der Komponente c) handelt es sich vorzugsweise um Wasser, welches im allgemeinen in Mengen von 0,05 bis 10 Gew.-%, bezogen auf das Gewicht der Komponente b) eingesetzt wird. Neben Wasser können als Treibmittel auch beispielsweise halogenierte Kohlenwasserstoffe wie Trifluorchlormethan, fluorierte Kohlenwasserstoffe, leichtflüchtige organische Lösungsmittel wie z.B. Pentan, Aceton oder Diethylether eingesetzt werden. Die Mitverwendung solcher Treibmittel neben Wasser ist allerdings weniger bevorzugt.

Bei den erfindungswesentlichen Katalysatoren d) handelt es sich um in der Alkalisalz-Form vorliegende Umsetzungsprodukte von (i) tri- oder höherfunktionellen Alkoholen des Molekulargewichtsbereichs 92 bis 1 000 mit (ii) intramolekularen Carbonsäureanhydriden. Die Umsetzungsprodukte weisen (im statistischen Mittel) mindestens 2, vorzugsweise 2 bis 5, Hydroxylgruppen und mindestens 0,5, vorzugsweise 1,0 bis 4, Carboxylatgruppen auf, wobei die Gegenionen zu den Carboxylatgruppen Alkalikationen darstellen. Bei den "Umsetzungsprodukten" der Ausgangskomponente (i) und (ii) kann es sich, wie aus dem Gehalt an Carboxylatgruppen ersichtlich, auch um Gemische aus echten Umsetzungsprodukten mit überschüssigen Mengen an Alkoholen (i) handeln.

Geeignete mehrwertige Alkohole zur Herstellung der Umsetzungsprodukte sind beispielsweise Glycerin, Trimethylolpropan, Sorbit, Pentaerythrit, Gemische derartiger mehrwertiger Alkohole, Alkoxylierungsprodukte des oben genannten Molekulargewichtsbereichs derartiger mehrwertiger Alkohole oder von Gemischen derartiger Alkohole, wobei bei der Alkoxylierung Propylenoxid und/oder Ethylenoxid in beliebiger Reihenfolge oder im Gemisch, vorzugsweise jedoch ausschließlich Propylenoxid zum Einsatz gelangen.

Geeignete intramolekulare Carbonsäureanhydride zur Herstellung der Umsetzungsprodukte sind beispielsweise Maleinsäureanhydrid, Phthalsäureanhydrid, Hexahydrophthalsäureanhydrid, Bernsteinsäureanhydrid, Pyromellitsäureanhydrid oder beliebige Gemische derartiger Anhydride. Maleinsäureanhydrid wird besonders bevorzugt eingesetzt.

Die Umsetzung zwischen Anhydrid und mehrwertigem Alkohol erfolgt in an sich bekannter Weise, im allgemeinen in Substanz innerhalb des Temperaturbereiches von 20 bis 100°C, bis die theoretisch zu erwartende Säurezahl des Umsetzungsproduktes erreicht ist. Zur Überführung der gebildeten Carboxylgruppen in Carboxylatgruppen werden vorzugsweise Hydroxide, Carbonate oder Dicarbonate von Natrium oder Kalium eingesetzt, wobei diese Basen vorzugsweise in Form von wäßrigen Lösungen zum Einsatz gelangen, so daß unmittelbar Gemische aus erfindungsgemäßem Katalysator d) und Treibmittel c) anfallen, die dann mit den übrigen Komponenten b) bis e) abgemischt werden können.

Falls zur Herstellung der Alkalisalze größere Wassermengen erforderlich sind als später als Treibmittel benötigt werden, kann der unerwünschte Überschuß selbstverständliche vor der Durchführung des erfindungsgemäßen Verfahrens destillativ entfernt werden.

Die erfindungswesentlichen Katalysatoren d) werden bei der Durchführung des erfindungsgemäßen Verfahrens in einer Menge von 0,5 bis 10, vorzugsweise 1,0 bis 10 Gew.-%, bezogen auf das Gewicht der Komponente b) eingesetzt.

Neben den erfindungswesentlichen Katalysatoren kann das Reaktionsgemisch auch noch weitere, an sich bekannte Katalysatoren enthalten, obwohl dies weniger bevorzugt ist. Derartige Katalysatoren sind beispielsweise beliebige Alkalisalze von Carbonsäuren, die nicht der Definition der Komponente d) entsprechen, wie beispielsweise Kaliumacetat, Kaliumtartrat oder Kaliumsuccinat oder klassische Katalysatoren wie Triethylendiamin, Bis-(2-dimethylaminoethyl)-ether, N,N-Dimethylethanolamin, N,N,N',N",N"-Pentamethyldiethylentriamin, N-Methylmorpholin, Dimethylbenzylamin, tertiäre Alkylphosphine, Zinn(II)-octoat, Dibutylzinn-(IV)-dilaurat, sowie Chelate von Metallen, wie z.B. Chelate des Acetylacetonats von Magnesium, Zirkon oder Nickel. Diese gegebenenfalls mitverwendeten, der Gruppe e) der erfindungsgemäßen Ausgangsmaterialien zuzuordnenden Katalysatoren, werden, falls überhaupt, allenfalls in Mengen von max. 1,0 Gew.-%, bezogen auf das Gewicht der Komponente b) eingesetzt.

Weitere gegebenenfalls mitzuverwendende Hilfsmittel e) sind die üblichen Zusatzstoffe wie Flammschutzmittel, Füllstoffe, Pigmente, Weichmacher, Antistatika oder Zellregulierungsmittel.

Bei der Durchführung des erfindungsgemäßen Verfahrens werden die genannten Ausgangsmaterialien in solchen Mengenverhältnissen miteinander zur Reaktion gebracht, die einer NCO-Kennzahl (Anzahl der NCO-Gruppen dividiert durch die Anzahl der gegenüber NCO-Gruppen reaktionsfähigen Gruppen, multipliziert mit 100) von 70 bis 120 entspricht. Im allgemeinen werden die Komponenten b) bis e) zu einer "Polyolkomponente" vermischt, die dann nach den üblichen Methoden der Polyurethanschaumstoffherstellung mit der Polyisocyanatkomponente zur Reaktion gebracht wird.

Bei der Durchführung des erfindungsgemäßen Verfahrens erfolgt ein "Hinterschäumen" einer Kunststoffolie. Für diesen Zweck geeignete Kunststoffolien sind alle beliebigen Deckschichten, die bisher bei der Herstellung von Folienverbundwerkstoffen durch Hinterschäumen von Kunststoffolien mit Polyurethanschaumstoffen hergestellt worden sind. Beispielhaft genannt seien Folien aus Polyvinylchlorid (PVC), thermoplastischem Polyurethan, Polymerblends aus PVC und ABS oder thermoplastischen Polyolefinen und dergleichen.

Vorzugsweise erfolgt die Durchführung des erfindungsgemäßen Verfahrens dergestalt, daß man die Innenwände einer Form zumindest teilweise mit der zu hinterschäumenden Kunststoffolie auskleidet und dann das Formwerkzeug mit dem schäumfähigen Gemisch befüllt. Die für die Innenauskleidung der Formen verwendeten Folien können in an sich bekannter Weise vorgeformt werden, wobei man sich der bekannten Technik des Tiefziehens beziehungsweise "Powder-Flush" bedient. Die Menge des in die Form eingetragenen schäumfähigen Gemischs wird im allgemeinen so bemessen, daß Schaumstoffe einer Rohdichte von 30 bis 500, vorzugsweise 70 bis 200 kg/m³ resultierten.

Die nachfolgenden Beispiele dienen der weiteren Erläuterung des erfindungsgemäßen Verfahrens.

### Beispiele

### 1. Herstellung eines erfindungsgemäß zu verwendenden Katalysators

9,8 g (0,1 mol) Maleinsäureanhydrid werden mit 30,6 g (0,1 mol) eines Polyetherpolyols des Molekulargewichts 306, hergestellt durch Ethoxylierung von Trimethylolpropan, bei 50°C gerührt, bis das Anhydrid aufgelöst ist. Die Reaktion wird bei Erreichen einer Säurezahl von 135 mg KOH/g abgebrochen. Die Überführung des auf diese Weise hergestellten Halbesters in das ensprechende Alkalisalz erfolgt in der nächsten Reaktionsstufe.

### 2. Herstellung einer erfindungsgemäßen Polyolformulierung

100 Gew.-Teile eines Polyetherpolyols OH-Zahl 28, hergestellt durch Propoxylierung von Trimethylolpropan und anschließende Ethoxylierung des Propoxylierungsprodukts (PO:EO-Gewichtsverhältnis = 85:15), werden mit 3 Gew.-Teilen des unter 1) beschriebenen Halbesters vermischt. Anschließend wird diese Mischung mit 0,42 Gew.-Teilen Kaliumhydroxid, gelöst in 2,4 Gew.-Teilen Wasser vermischt.

### 3. Polyisocyanatkomponente

In den nachfolgenden Beispielen wurde ein Polyisocyanatgemisch der Diphenylmethanreihe mit einer Viskosität (23°C) von 200 mPa.s und einem NCO-Gehalt von 32 Gew.-% verwendet.

### 4. Erfindungsgemäßes Beispiel und Vergleichsbeispiele

Die Herstellung der Schaumstoffe erfolgt nach der Methode der Handverschäumung. Dabei werden alle Komponenten mit Ausnahme der Polyisocyanatkomponente während 30 Sek. vorgerührt (Rührgeschwindigkeit: 1000 Umdrehungen/Min.). Anschließend wird die Polyisocyanatkomponente zugesetzt und während weiterer 10 Sek. bei Raumtemperatur weiter gerührt. Die NCO-Kennzahl beträgt in allen Beispielen 100.

Das flüssige, schäumfähige Gemisch wird dann in ein Werkzeug zur Plattenherstellung der Abmessung 20 x 20 x 2 cm gegeben, dessen Innenwände vorher mit einer Folie der Dicke 1 mm aus Weich-PVC ausgekleidet worden sind. Die Menge des schäumfähigen Gemischs wird jeweils so bemessen, daß die Rohdichte des resultierenden Schaumstoffs 150 kg/m³ beträgt.

Die Start-, Steig- und Abbindezeiten wurden in Parallelversuchen bestimmt, wobei die Polyolformulierung wie beschrieben mit der Polyisocyanatkomponente in einem Becherglas unter Rühren bei Raumtemperatur vereinigt wird. Die Startzeit ist dann die Zeit, die vom Zeitpunkt der Polyisocyanatzugabe bis Beginn des Schäumvorgangs verstreicht; die Steigzeit ist die Zeit, die vom Zeitpunkt der Polyisocyanatzugabe bis zur Beendigung des Schäumvorgangs verstreicht; die Abbindezeit ist die Zeit, die vom Zeitpunkt der Polyisocyanatzugabe bis zur Klebfreiheit des Schaumstoffs verstreicht.

Die Weiterreißfestigkeit wurde am Schaumkern der hergestellten Platte nach DIN 53575 geprüft. Das Foggingverhalten wurde jeweils anhand von Schaumstoff-Prüfscheiben des Durchmessers 8 cm und der Dicke 2 mm geprüft. Die Prüfkörper wurden unterhalb einer gekühlten Glasscheibe jeweils während 16 Stunden auf 100°C erhitzt und das an der gekühlten Glasscheibe gebildete Kondensat gewogen.

Einzelheiten sind der nachstehenden Tabelle zu entnehmen.

Beispiel A ist erfindungsgemäß unter Verwendung der oben genannten Ausgangsmaterialien.

Beispiel B ist ein Vergleichsbeispiel, welches dem erfindungsgemäßen Beispiel A entspricht, wobei lediglich der erfindungsgemäße Katalysator (bestehend aus dem Halbester gemäß 1) und dem in 2) zu seiner Neutralisation verwendeten Kaliumhydroxid) durch 0,3 Gew.-Teile Kaliumacetat ersetzt worden ist.

Beispiel C ist ein Vergleichsbeispiel, welches dem erfindungsgemäßen Beispiel entspricht, wobei lediglich der erfindungsgemäße Katalysator durch 0,76 Gew.-Teile permethyliertes Diethylentriamin ersetzt worden ist.

Beispiel D ist ein Vergleichsbeispiel, welches dem erfindungsgemäßen Beispiel entspricht, wobei lediglich der erfindungsgemäße Katalysator durch 4 Gew.-Teile des Umsetzungsprodukts aus äquimolaren Mengen Polyethylenglykol des Molekulargewichts 600 und Maleinsäureanhydrid, neutralisiert mit einer stöchiometrischen Menge Kaliumhydroxid, ersetzt worden ist.

Die Katalysator-Konzentrationen wurden in allen Beispielen so gewählt, daß annähernd gleiche Steigzeiten resultieren.

**Tabelle**

| Beispiel | A | B | C | D |
|---|---|---|---|---|
| Startzeit (s) | 26 | 12 | 14 | 22 |
| Steigzeit (s) | 102 | 100 | 100 | 105 |
| Abbindezeit (s) | 110 | 130 | 100 | 120 |
| | | | | |
| Weiterreißfertigkeit (N/mm) | 1,2 | 0,4 | 0,6 | 0,4 |
| | | | | |
| Foggingverhalten (mg) | 0,4 | 0,6 | 1,7 | 0,4 |

## Patentansprüche

1. Verfahren zur Herstellung von Verbundkörpern durch Hinterschäumen einer Kunststoffolie als Deckschicht mit einem zu einem weichen oder halbharten Polyurethanschaumstoff ausreagierenden Reaktionsgemisch, bestehend aus
a) einer Polyisocyanatkomponente,
b) einer Salzgruppen-freien Polyolkomponente,
c) mindestens einem Treibmittel,
d) Alkalisalzen von Hydroxycarbonsäuren als Katalysatoren, sowie gegebenenfalls
e) weiteren Hilfs- und Zusatzmitteln der Polyurethanchemie und gegebenenfalls weiteren, an nich bekannten Katalysatoren, die nicht der Definition der Komponente d) entsprechen, in einer Menge von max. 1.0 gew% bezogen auf das gewicht der Komponente b)
dadurch gekennzeichnet, daß man als Komponente d) in einer Menge von 0,1 bis 10 Gew.-%, bezogen auf das Gewicht der Komponente b), in der Alkalisalz-Form vorliegende Umsetzungsprodukte, die im statistischen Mittel pro Molekül mindestens 2 alkoholische Hydroxylgruppen und mindestens 0,5 Alkali-Carboxylatgruppen aufweisen aus (i) mindestens dreiwertigen Alkoholen des Molekulargewichtsbereichs 92 bis 1 000 und (ii) intramolekularen Carbonsäureanhydriden verwendet.

2. Verfahren gemäß Anspruch 1, dadurch gekennzeichnet, daß man als Komponente a) bei Raumtemperatur flüssige, gegebenenfalls Urethan-, Carbodiimid- und/oder Uretdiongruppen aufweisende Polyisocyanatgemische der Diphenylmethanreihe verwendet.

3. Verfahren gemäß Anspruch 1 und 2, dadurch gekennzeichnet, daß man als Komponente b) Polyetherpolyole oder Gemische von Polyetherpolyolen einer (mittleren) Hydroxylfunktionalität von 2 bis 4 bei einem Molekulargewicht von 400 bis 12 000, oder Gemische derartiger Polyetherpolyole mit bis zu 10 Gew.-%, bezogen auf das Gewicht der Polyetherpolyole an 2- und/oder 3-wertigen Alkoholen eines unter 400 liegenden Molekulargewichtes verwendet.

4. Verfahren gemäß Anspruch-1 bis 3, dadurch gekennzeichnet, daß man als Komponente c) Wasser verwendet.

## Claims

1. Process for preparing composites by backing a plastics film, as the top layer, with a reaction mixture which reacts to give a flexible or semi-rigid polyurethane foam and consists of
a) a polyisocyanate component,
b) a polyol component containing no salt groups,
c) at least one blowing agent,
d) alkali metal salts of hydroxycarboxylic acids as catalysts, and optionally
e) further auxiliary agents and additives known from polyurethane chemistry and
optionally, further catalysts known per se, which do not correspond to the definition given for component d), in an amount of at most 1.0 wt.% with reference to the weight of component b),
characterised in that the reaction products formed from (i) at least trihydric alcohols with a molecular weight in the range 92 to 1 000 and (ii) intramolecular carboxylic anhydrides are used as component d), in an amount of 0.1 to 10 wt.%, with reference to the weight of component b), in the form of alkali metal salts, these containing, as a statistical average, at least 2 alcoholic hydroxyl groups and at least 0.5 alkali metal carboxylate groups per molecule.

2. Process according to Claim 1, characterised in that polyisocyanate mixtures from the diphenylmethane series which are liquid at room temperature and optionally contain urethane, carbodiimide and/or uretdione groups, are used as component a).

3. Process according to Claims 1 and 2, characterised in that polyetherpolyols or mixtures of polyetherpolyols with an (average) hydroxyl functionality of 2 to 4 and a molecular weight of 400 to 12 000, or mixtures of this type of polyetherpolyol with up to 10 wt%, with respect to the weight of polyetherpolyols, of 2 and/or 3-hydric alcohols with a molecular weight of less than 400, are used as component b).

4. Process according to Claims 1 to 3, characterised in that water is used as component c).

## Revendications

1. Procédé pour la fabrication de corps composites par application, sur la face dorsale d'une feuille en matière synthétique utilisée comme couche de protection, d'un mélange réactionnel procurant, lorsqu'il a cessé de réagir, une mousse de polyuréthanne souple ou semi-dure, constitué par
a) un composant de polyisocyanate,
b) un composant de polyol exempt de groupes salins,
c) au moins un agent moussant,
d) des sels de métaux alcalins d'acides hydroxycarboxyliques comme catalyseurs, et éventuellement
e) d'autres adjuvants et additifs de la chimie des polyuréthannes, et
le cas échéant, d'autres catalyseurs connus en soi qui ne rentrent pas dans le cadre de la définition du composant d), en une quantité maximale de 1,0% en poids rapporté au poids du composant b),
caractérisé en ce qu'on utilise comme composant d), des produits réactionnels présents sous la forme de sels de métaux alcalins en une quantité de 0,1 à 10% en poids rapportés au poids du composant b), qui présentent, dans la moyenne statistique par molécule, au moins 2 groupes hydroxyle alcooliques et au moins 0,5 groupe carboxylate de métaux alcalins, constitués par (i) des alcools au moins trivalents du domaine de poids moléculaire de 92 à 1000 et (ii) des anhydrides carboxyliques intramoléculaires.

2. Procédé selon la revendication 1, caractérisé en ce qu'on utilise comme composant a), des mélanges de polyisocyanates de la série des diphénylméthanes, liquides à la température ambiante, présentant le cas échéant des groupes uréthane, carbodiimide et/ou uretdione.

3. Procédé selon les revendications 1 et 2, caractérisé en ce qu'on utilise, comme composant b), des polyétherpolyols ou des mélanges de polyétherpolyols possédant une fonctionnalité hydroxyle (moyenne) de 2 à 4 et un poids moléculaire de 400 à 12.000, ou encore des mélanges de polyétherpolyols de ce type avec, jusqu'à concurrence de 10% en poids rapportés au poids des polyétherpolyols, des alcools bi- et/ou trivalents d'un poids moléculaire inférieur à 400.

4. Procédé selon les revendications 1 à 3, caractérisé en ce que, comme composant c), on utilise de l'eau.
